# EUROPEAN PATENT SPECIFICATION

(11) **EP 3 614 705 B1**
(45) Date of publication and mention of the grant of the patent: **29.07.2020**
(21) Application number: 17783899.2
(22) Date of filing: 14.06.2017
(51) Int. Cl.: H04W 8/00

(54) **METHOD AND SYSTEM TO COLLECT INFORMATION FROM OFF-CHANNEL DEVICES**
VERFAHREN UND SYSTEM ZUM SAMMELN VON INFORMATIONEN AUS OFF-KANAL-VORRICHTUNGEN
PROCÉDÉ ET SYSTÈME DE COLLECTE D'INFORMATIONS DE DISPOSITIFS HORS CANAL

(43) Date of publication of application: 26.02.2020
(73) Proprietor: Aoife Solutions, S.L., 41900 Camas (Sevilla) (ES)
(72) Inventor: NUNEZ HERNANZ, Ignacio, 41900 Camas (ES); AGUILERA BONET, Pablo, 41900 Camas (ES); AYUB GONZALEZ GARRIDO, José, 41900 Camas (ES); DELGADO ALFONSO, José Antonio, 41900 Camas (ES)
(74) Representative: Carvajal y Urquijo, Isabel
(86) International application number: PCT/ES2017/070429
(87) International publication number: WO 2018/229310

(56) References cited:
- US-A1- 2010 246 419
- US-A1- 2013 308 618

## Description

### FIELD OF THE INVENTION

The present invention relates generally to wireless communications, and more specifically, to systems, methods and devices for gathering information from off-channel wireless devices by frame injection and response.

### BACKGROUND OF THE INVENTION

Unless otherwise indicated herein, the approaches described in this section are not prior art to the claims in this disclosure and are not admitted to be prior art by inclusion in this section.

In wireless networks, different entities from the network communicate by using radio propagation. Examples of wireless communication networks include, but are not limited to, wireless local area networks (WLAN), wireless metropolitan area networks (WMAN), and wireless personal area networks (WPAN). Wireless networks generally present a series of features like the ease to manage mobile devices such as (but not limited to) smartphones, tablets, or laptops; the dependence of the physical media; and the need for an access method to share radio resources such as (but not limited to) transmission power, spectrum allocation, and antenna capabilities.

A WiFi network is a type of WLAN which follows the IEEE 802.11 standard. For the sake of simplicity, in the following, and without loss of generality, and entity that provide wireless access to a plurality of user devices is referred as Access Point (AP). A user device is referred as client station (STA). It is to be understood that the problem addressed within this disclosure is common to any wireless network, and hence the methods, systems and apparatus disclosed herein may be applied with modifications to any wireless network technology.

Multiple wireless networks might coexist in the same (or near) location, interfering with each other and causing Quality of Service (QoS) degradation, throughput below expectations, data rate problems, unpredictable disconnections, and latency problems, among others issues. For that reason, WiFi networks are configured to operate in different frequency channels, labeled with a number (Ch1, Ch2, ...). In addition, WiFi devices within the same network share the same frequency channel, and thus they must coexist and prevent destructive interference.

Those skilled in the art are aware of the fact that IEEE 802.11 shared spectrum mechanism is based on CSMA-CA (Carrier Sense Multiple Access - Collision Avoidance), where the transmitter might request the control of the air with a RTS (Request to Send) frame, and the alluded receiver responses with a CTS (Clear to Send) frame to inhibit other transmitters.

The set of devices, which are connected together and share airtime is known as BSS (Basic Service Set), and usually is given by one AP and several STAs. The collision domain is given by the coverage area (the surroundings of the transmitters where the power is above a specific receiver sensitivity threshold) and the frequency channel. Thus, all the devices, which want to communicate, must be tuned to the same frequency. Note that the collision domain may be given by all the BSS, which operates on the same frequency channel.

In the IEEE 802.11 standard, there are several channels available in two unlicensed spectrum bands: around 2.4 GHz and around 5 GHz. For example, and without loss of generality, an AP, which is configured to channel 1 in 2.4 GHz band (whose carrier frequency is 2.462 GHz), is able to transmit/receive data frames from STAs tuned to the same channel. The specific available frequency channels depend on regional/national restrictions, so they may change between different countries.

The reason behind this selection of channels is to distinguish transmissions, which are occurring simultaneously at the same place. Thus, two concurrent STAs may transmit (or receive) to (or from) their connected APs even if they are in the same physical place, because each STA-AP pair in this example uses different radio channels. Multiple STAs are usually connected to one AP and configured with the same channel, but the present invention is not limited to this specific scenario.

Consequently, WiFi communications within a BSS are restricted to one collision domain (and thus one specific frequency channel), and a device tuned to a specific channel cannot communicate with devices tuned to other channels. This procedure has been successfully implemented in WiFi solutions during the last two decades. However, the increasing demand of high-definition multimedia traffic, together with the growing number of devices conducted by loT (Internet of Things), as well as other types of communication services, requests the introduction of novel smart mechanisms to provide intelligence to wireless networks.

Those skilled in the art shall note that these smart advances might be possible, for example, if network devices are able to communicate with devices which are tuned to other channels. This allows gathering radio information from devices that are connected to different APs and tuned to different frequency channels. Unfortunately, the IEEE 802.11 standard mode of operation (infrastructure) is not for off-channel communications and one has to develop novel procedures to request data from foreign STAs.

In one embodiment, this invention is circumscribed to a scenario where APs request radio information to STAs, which are no connected to it. The only requisite is that these STAs have their WiFi radios on, and they may or may not be associated with other external APs (and tuned to other channels). We assume that the channel where the STA is tuned is known to the probing AP, as well as the MAC address of the target STA.

### DESCRIPTION OF RELATED ART

In relation to the gathering of information from off-channel STAs, prior art suppose the use of non-WiFi or proprietary mechanisms in order to probe the target device, like (but not limited to) Bluetooth, Zigbee, and proprietary protocols.

However, in WiFi wireless networks, prior art related to the off-channel frame transmission addresses the problem of communicating with off-channel devices, but it does not addresses the problem of gathering information for the target STA. Examples are disclosed in US 2010/0246419 A1 and US 2013/0308618 A1. The presented invention differs from the state of the technique in the sense that it solves the problem of gathering radio information from a target STA, when this device is out of our WiFi network (it is off-channel), by injecting a frame and listening to the target's response.

### SUMMARY OF THE INVENTION

The invention is defined by the appended claims. Some features, methods, systems, and apparatuses disclosed herein will be summarized in this section. This summary is provided to introduce the subject matter that is further described below in the Detailed Description and Drawings. Accordingly, this Summary should not be considered to describe essential features nor used to limit the scope of the claimed subject matter.

The present invention relates generally to wireless communications, and more specifically, to systems methods and devices for gathering information from off-channel wireless devices by frame injection and response.

Certain aspects of the present disclosure provide a method for gathering information from off-channel devices in wireless networks. The method may be performed for only one target device, or for a plurality of target devices within a wireless network. The method generally includes frame generation at the probing AP, queuing injection frames to transmit from the current frequency channel to another frequency channel, frame reception from the target STA, and radio parameters measurement and storage from the received frame.

Certain aspects of the present disclosure provide a software product for the gathering of information from off-channel devices in wireless networks. The software product may be executed within each AP and for only one target device, or for a plurality of target devices within a wireless network. The software product generally includes a computer-readable and computer-writable medium having instructions able to be executed by an apparatus for generating, coding, and transmitting frames, as well as receiving, decoding and storing frames from off-channel devices in the wireless medium. Certain aspects of the present disclosure provide an apparatus for the gathering of information from off-channel devices in wireless networks. The apparatus generally includes a transceiver (transmitter-receiver) system configured to transmit and/or receive frames from a different channel to the one where it is normally operating, a processing system configured to build specific probing frames, a processing system to recover useful information from received frames, and a storage system to save this gathered information, the code, and instructions.

### BRIEF DESCRIPTION OF THE DRAWINGS

The details of one or more implementations are set forth in the accompanying figures and the detailed description below. In the figures, the leftmost digit of a reference number identifies the figure in which the reference number first appears. The use of the same reference numbers in different instances in the description and the figures indicate similar elements.

It should be understood that the appended drawings show only certain aspects of the disclosure described herein, and should therefore not to be considered limiting the scope of the invention described herein.
- Figure 1 shows the problem formulation. With frame injection, one STA connected to AP1 (channel Ch1) may be polled from AP2 (channel Ch2). However, AP2 needs to identify that probed STA by building an specific MAC address for the corresponding frame.
- Figure 2 shows the basic format of management frames header for IEEE 802.11 standard.
- Figure 3 shows the ACK frame format. It only has one MAC address (DA).
- Figure 4 shows the MAC addresses in the management frame header built within the AP2 to be injected, in this example, from channel Ch2 to channel Ch1.
- Figure 5 shows the MAC address in the ACK frame from STA to the unknown transmitter (in this example, AP2).
- Figure 6 shows an exemplary frame injection from AP2 (channel Ch2) to the target STA (channel Ch1).
- Figure 7 shows an example entry for the target STA in the database. In this example, recollecting this data would not have been possible from a device tuned in Ch2 to a STA configured in Ch1, without off-channel frame injection.

### DETAILED DESCRIPTION OF THE INVENTION

The present invention relates generally to wireless communications, and more specifically, to systems methods and devices for gathering information from off-channel wireless devices by frame injection and response. The information gathering process proposed herein may be used within a plurality of wireless devices such as (but not limited to), access points, wireless stations, wireless sensors, and wireless routers.

Various aspects of the novel systems, apparatuses, and methods are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein, those skilled in the art should appreciate that the scope of this disclosure is intended to cover any aspect of the novel systems, apparatuses, and methods disclosed herein, whether implemented independently of, or combined with, any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect disclosed herein may be embodied by one or more elements of a claim.

Any variation, modification, and/or permutation of the particular aspects set forth herein fall within the scope of the present disclosure. Those skilled in the art should notice that aspects of the present disclosure can be applicable to different networks, network topologies, network configurations, technologies, devices, protocols, communication standards.

This disclosure presents a novel method for the gathering of radio information between two wireless devices with WiFi capabilities, when they are not connected to the same BSS and, consequently, they may be operating on different channels. The proposed method is based upon off-channel frame injection and sniffing, and it relies on advanced capabilities of APs. We present an original way to identify ACK (acknowledgments) which are coming from an specific STA which is not tuned to the same channel that the operating channel of our transmitting AP. The data gathered may be stored in a database to track the radio characteristics of the target STA.

An access network is the part of the network that is designed to provide communications between STAs and the core network, by using one or more APs. As stated above, for the sake of simplicity and without loss of generality, an entity that provides wireless access to a plurality of users' devices is referred as AP, and a user's device is referred as STA (laptops, smartphones, tablets, wireless sensors, or some other device with a WiFi interface). The BSS consists on the set of elements defined by: an AP, its coverage area and frequency channel, and the STAs connected to that AP. In some cases, a STA may also be configured to act as an AP.

A core network is the part of a communications network that provides services to the STAs connected through the access network. Those skilled in the art should appreciate that the invention proposed herein can be applied for any core network technology, as well as for any service provided through the wireless network.

According to some aspects of the present invention, the plurality of APs that compose the access network may be distributed along the coverage area. In other aspects of the present invention, a plurality of APs may be connected through a backbone network in order to allow communication among them. In this regard, different transmission mediums may be used, for example, but not limited to, optical fiber, radio waves, infrared wireless links, coaxial cable, and shielded/unshielded twisted pair wires.

Given a BSS with one AP (that may be communicating with STAs tuned to the same channel), we aim to send data and receive response from another STA tuned to a different channel (because it is connected to another AP).

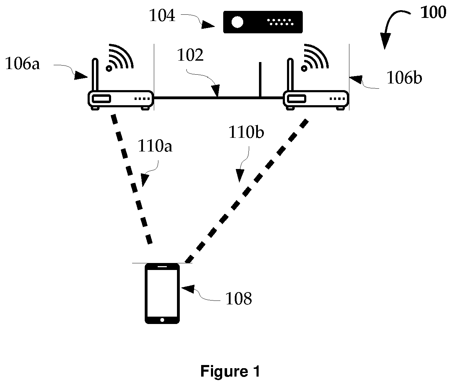

Let us suppose, as an example and without loss of generality, that we have two APs in the 2.4 GHz band. Figure 1 shows this configuration. They might be connected by using any medium **102** (for example, and without loss of generality, Ethernet or wireless) to a router **104**. In one embodiment, AP1 **106a** is tuned to channel Ch1, and AP2 **106b** is tuned to channel Ch2. There is a STA **108** connected **110a** to AP1, so its radio is tuned to channel Ch1. If AP2 wants to communicate **110b** with the STA, it must go off-channel for some time. This is known as the ROC (Remain On-Channel) procedure.

Those skilled in the art shall note that AP2 is aware of which STAs are associated with each AP (because they share information via any other medium **102**), so it knows which channel is the one where the target STA **108** is listening to. In one embodiment, and without loss of generality, this channel is Ch1. For that reason, AP2 may inject frames from channel Ch2 (where it normally works) to channel Ch1.

Note that AP1 already knows the RSSI (Received Signal Strength Indicator) of frames received from STA, because they are interchanging frames. However, without the invention proposed herein, AP2 is not able to receive frames from STA, because they are not tuned to the same channel. Consequently, AP2 is not able to know the RSSI for frames received by the target STA. In one embodiment, AP2 only may have outdated RSSI information from past *"Probe request"* frames (for example, if the STA is moving).

Those skilled in the art shall note that it is not sufficient to listen to the Ch1, because STA may be quiet or idle for some time. For that reason, the STA needs to be actively probed in some way or another, and this is done by off-channel frame injection.

### The role of MAC addresses in IEEE 802.11 frames

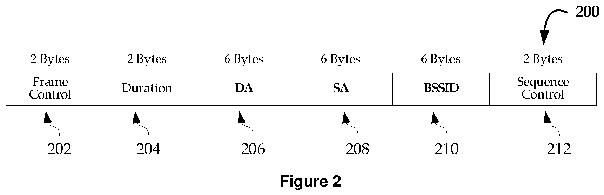

In Figure 2, the MAC header of 802.11 management frames is shown. We aim to send a management frame to the target STA, so it can respond with an ACK, in order to gather useful information from the driver like the RSSI.

There are three MAC addresses in the header of a management frame:
- DA, Destination Address **206**: final recipient of the data.
- SA, Source Address **208**: source of the data.
- BSSID (Basic Service Set Identifier) Address **210**: unique identifier of the BSS.

The other fields in the header of management frames are the frame control **202** field, the duration **204** field and the sequence control **212** field. They are independent of the invention disclosed herein.

The management frame sent by AP2 shall not be processed by the MAC layer of the target STA **108**, because it is received from an unknown source (different from AP1, defined by its BSSID address). Thus, it may be a management frame of any sub-type like (but not limited to) *"Authentication", "Deauthentication", "Association request", "Association response", "Reassociation request", "Reassociation response", "Disassociation", "Beacon", "Probe request",* or *"Probe response".*

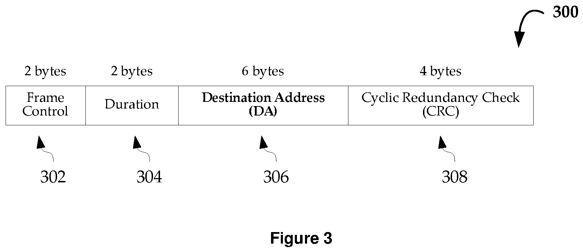

However, control frames, like the ACK that we would like to receive (in order to analyze its radio parameters), has a shorter length with only one MAC address (DA) **306**. In Figure 3, ACK frame format is shown. This shorter length is due to the fact that when a transmitter **106b** is waiting for an ACK, it remains (during a specific period of time) in a state where it only accepts frames from the receiver **108** that was the destination of its last sent frame. For that reason, the ACK frame does not need to include SA, because the transmitter knows the source of that control frame. Note that, unlike data and management frames, control frames do not have a frame body: all of its bits may be considered as part of the header. The other fields within the ACK frame header are the frame control **302** field, the duration **304** field, and the Cyclic Redundancy Check (CRC) **308** field. They are independent of the invention disclosed herein.

### Identification of the STA

From the AP2 point of view, it needs to send a management frame with a specific virtual SA designed to identify the target STA **108**. This MAC address **404** (identified as STA') may be built by several forms, as long as it satisfies two conditions:
- It is unequivocally related to the MAC address of the target STA.
- It is different to any possible MAC address in the access network.

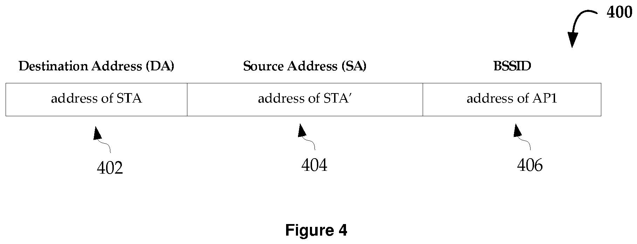

In one embodiment, and without loss of generality, STA' **404** may be defined as STA+1, but this is only one example that does not limit the scope of this invention. In other embodiment, SA might be any virtual MAC that univocally represents the target STA within the BSS of AP2. By doing this, the ACK received at the AP2 **106b** will have a DA **502** that identifies the STA **108** without ambiguity, and the radio information gathered by the driver may be associated with that specific STA. Figure 4 shows the addresses in the management frame injected by AP2. The DA of this probing management frame is the address **402** of the target STA, and the BSSID is the address **406** of the AP1.

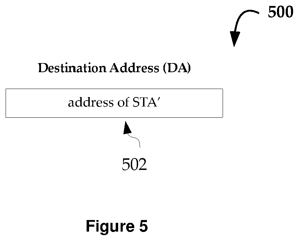

In one embodiment, as the STA receives this management frame, it responses with an ACK with the DA **502** shown in Figure 5. After that, the STA discards the received management frame because the SA does not correspond to the AP where it is connected (AP1 in this example).

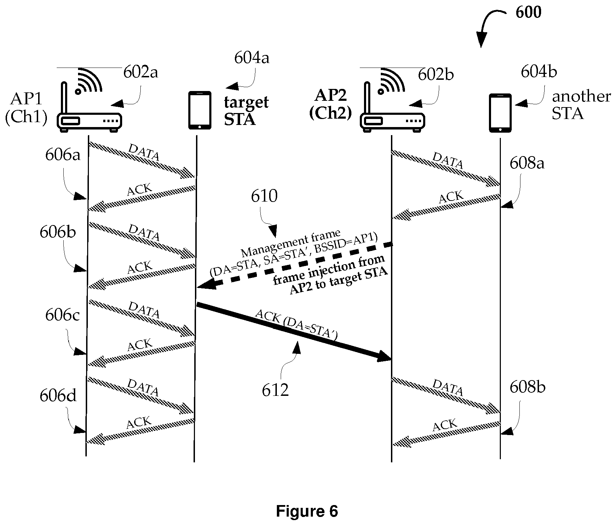

Figure 6 shows the message pass diagram of this off-channel frame injection **610** from AP2 **602b**, and the corresponding response from the target STA **604a**, which is connected to AP1 **602a**. On its part, other STAs **604b** may be connected to AP2.

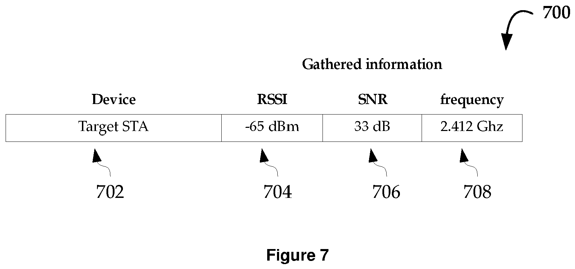

On its part, the AP2 receives the ACK **612** with address STA' **502**, deduce the original MAC address, and determines that the sender of that ACK is the STA with that MAC address **402**. So it may gather radio information from that frame and associate to the target STA in its database. Figure 7 shows, without loss of generality, an example entry for this target STA **702** in AP2 database. In one embodiment of the present invention, AP2 shall store radio parameters like RSSI **704**, SNR **706** or frequency **708**.

Those skilled in the art shall note that the AP2 **106b** may receive lots of ACKs (**608a** and **608b**) from different target STAs, so it must use a field of the ACK to identify the probed device. In the present invention, this field is the DA which is equal to STA' **404**. In addition, and without loss of generality, AP1 may be communicating (**606a**, **606b**, **606c**, and **606d**) with the target STA or another STAs within its channel.

### The frame injection mechanism

On one hand, frame injection relates to the capacity of a communication device to build and send data frames to the transmission medium without passing through the entire network stack. On the other hand, off-channel communications allow WiFi devices to connect to each other and even form groups (although usually this mechanism works in a one-to-one basis), even if they are not tuned to the same frequency channel. One of the devices assumes the role of an AP, and the others connect to it as clients (STAs).

For the purpose of transmitting frames on the target off-channel frequency, there is an specific transmission queue in the AP. Unfortunately, the transmitter cannot decide the specific moment where the frame is sent: it only builds those frames and push them into the queue. For that purpose, those skilled in the art shall note that a wireless transmitter may go off-channel for a moment and send a queued frame. This is the aforementioned ROC procedure.

Note that the sent management frame is not preventing contention, so it may collide with legitimate frames simultaneously sent from another connected device (for example, in channel Ch1). If this happen, the probing frames are lost. Similarly, the ACK sent as a response from the target STA to the unknown transmitter may be also lost, so the complete information gathering procedure shall not always update the information in the database. However, as this is an opportunistic communication mechanism working on a best-effort basis, these lost frames does not affect substantially the overall performance of the network.

Some examples of applications of this information gathering mechanism are, without loss of generality, the update of power measurements of the target STA for roaming and location procedures. Indeed, updating the received power of frames from the polled device shall be used to make smart decisions about the nearest AP, or to estimate the distance between an AP and a STA connected to other AP. However, this is only an example and shall not be seen as a limitation of the present invention.

Although the subject matter has been described in language specific to structural features and/or methodological operations, it is to be understood that the subject matter defined in the appended claims is not necessarily limited to the specific features or operations described above. Those skilled in the art will also appreciate that, though not explicitly disclosed herein, the above-described embodiments may be combined with other exemplary embodiments with an appropriate modifications.

It is to be further understood that the claims are not limited to the precise configuration and components illustrated in the detailed description and the figures. Various modifications, changes and variations may be made in the arrangement, operation and details of the methods and apparatuses of the claims.

While the foregoing is directed to aspects of the present disclosure, other and further aspects of the disclosure may be devised without departing from the basic scope thereof, and the scope thereof is determined by the claims that follow.

## Claims

1. A method for gathering radio information from target devices connected to a first access point (602a) and operating on a first frequency channel, Ch1, in a wireless network, comprising:
generating a probing frame (400) at a probing device (602b) operating on a second frequency channel, Ch2, wherein:
the destination address (402) of the probing frame (400) is the address of a target device (604a), and
the BSSID address (406) of the probing frame (400) is the address of the first access point (602a);
injecting (610), at the probing device (602b), the probing frame (400) into a transmission queue associated to the first frequency channel, Ch1;
wherein the source address (404) of the probing frame (400) is a virtual address, STA', that univocally identifies the target device (604a), said virtual address being different to any possible MAC address in the wireless network;
and wherein the method further comprises:
when an ACK frame (500) is received (612) at the probing device (602b), analyzing the ACK frame (500) to determine that the sender of the ACK frame (500) is the target device (604a) if the destination address (502) of the ACK frame (500) is the virtual address, STA', that univocally identifies the target device (604a), and in that case:
measuring radio parameters from the received ACK frame (500);
storing the radio parameters;
associating the stored radio parameters to the target device (604a).

2. The method of claim 1, wherein the probing device is an access point (602b).

3. The method of claim 1, wherein the probing device is a wireless device.

4. The method of claim 1, wherein the information measured and stored in the probing device (602b) is related to the received signal strength, noise level, signal to noise and interference ratio, carrier frequency, or any other kind of information from the received ACK frame (500).

5. A computer program product for gathering radio information from target devices connected to a first access point (602a) and operating on a first frequency channel, Ch1, in a wireless network, comprising program instructions media configured to, when the program is executed on a processor:
generate a probing frame (400) at a probing device (602b) operating on a second frequency channel, Ch2, wherein:
the destination address (402) of the probing frame (400) is the address of a target device (604a), and
the BSSID address (406) of the probing frame (400) is the address of the first access point (602a);
inject (610), at the probing device (602b), the probing frame (400) into a transmission queue associated to the first frequency channel, Ch1;
wherein the source address (404) of the probing frame (400) is a virtual address, STA', that univocally identifies the target device (604a), said virtual address being different to any possible MAC address in the wireless network;
and wherein the program instructions media are further configured to, when the program is executed on a processor:
when an ACK frame (500) is received (612) at the probing device (602b), analyze the ACK frame (500) to determine that the sender of the ACK frame (500) is the target device (604a) if the destination address (502) of the ACK frame (500) is the virtual address, STA', that univocally identifies the target device (604a), and in that case:
measure radio parameters from the received ACK frame (500);
store the radio parameters;
associate the stored radio parameters to the target device (604a).

6. The computer program product of claim 5, wherein the probing device is an access point (602b).

7. The computer program product of claim 5, wherein the probing device is a wireless device.

8. The computer program product of claim 5, wherein the information measured and stored in the probing device (602b) is related to the received signal strength, noise level, signal to noise and interference ratio, carrier frequency, or any other kind of information from the received ACK frame (500).

9. An apparatus for gathering radio information from target devices connected to a first access point (602a) and operating on a first frequency channel, Ch1, in a wireless network, the apparatus operating on a second frequency channel, Ch2, comprising:
a transceiver system configured to transmit and receive IEEE 802.11 frames at the MAC layer;
a processing system configured to:
build a probing frame (400), wherein the destination address (402) of the probing frame (400) is the address of a target device (604a) and the BSSID address (406) of the probing frame (400) is the address of the first access point (602a); and
inject the probing frame (400) into a transmission queue associated to the first frequency channel, Ch1, of the transceiver system;
analyze and extract radio parameters from a received ACK frame (500); and
a storage system configured to store the radio parameters; wherein the source address (404) of the probing frame (400) is a virtual address, STA', that univocally identifies the target device (604a), said virtual address being different to any possible MAC address in the wireless network;
and wherein the processing system is further configured to, upon reception of an ACK frame (500), analyze the ACK frame (500) to determine that the sender of the ACK frame (500) is the target device (604a) if the destination address (502) of the ACK frame (500) is the virtual address, STA', that univocally identifies the target device (604a), and in that case:
measure radio parameters from the received ACK frame (500);
store the radio parameters on the storage system;
associate the stored radio parameters to the target device (604a).

10. The apparatus of claim 9, the apparatus being an access point.

11. The apparatus of claim 9, the apparatus being a wireless device.

12. The apparatus of claim 9, wherein the information measured and stored is related to the received signal strength, noise level, signal to noise and interference ratio, carrier frequency, or any other kind of information from the received ACK frame (500).

## Patentansprüche

1. Verfahren zum Sammeln von Funkinformationen aus Zielvorrichtungen, die mit einem ersten Zugangspunkt (602a) verbunden sind und auf einem ersten Frequenzkanal, Ch1, in einem drahtlosen Netzwerk arbeiten, umfassend:
Erzeugen eines Prüfrahmens (400) an einer Prüfvorrichtung (602b), die auf einem zweiten Frequenzkanal, Ch2, arbeitet, wobei:
die Zieladresse (402) des Prüfrahmens (400) die Adresse einer Zielvorrichtung (604a) ist, und
die BSSID-Adresse (406) des Prüfrahmens (400) die Adresse des ersten Zugangspunkts (602a) ist;
Einfügen (610), an der Prüfvorrichtung (602b), des Prüfrahmens (400) in eine Übertragungswarteschlange, die mit dem ersten Frequenzkanal Ch1 verknüpft ist;
wobei die Quelladresse (404) des Prüfrahmens (400) eine virtuelle Adresse, STA', ist, die die Zielvorrichtung (604a) eindeutig kennzeichnet, wobei sich die virtuelle Adresse von einer beliebigen möglichen MAC-Adresse in dem drahtlosen Netzwerk unterscheidet;
und wobei das Verfahren ferner Folgendes umfasst:
wenn ein ACK-Rahmen (500) an der Prüfvorrichtung (602b) empfangen wird (612), Analysieren des ACK-Rahmens (500), um zu bestimmen, dass der Sender des ACK-Rahmens (500) die Zielvorrichtung (604a) ist, wenn die Zieladresse (502) des ACK-Rahmens (500) die virtuelle Adresse STA' ist, die die Zielvorrichtung (604a) eindeutig kennzeichnet, und in diesem Fall:
Messen von Funkparametern aus dem empfangenen ACK-Rahmen (500);
Speichern der Funkparameter;
Verknüpfen der gespeicherten Funkparameter mit der Zielvorrichtung (604a).

2. Verfahren nach Anspruch 1, wobei die Prüfvorrichtung ein Zugangspunkt (602b) ist.

3. Verfahren nach Anspruch 1, wobei die Prüfvorrichtung eine drahtlose Vorrichtung ist.

4. Verfahren nach Anspruch 1, wobei sich die gemessenen und gespeicherten Informationen in der Prüfvorrichtung (602b) auf die Stärke des empfangenen Signals, den Rauschpegel, das Signal-Rausch-Interferenz-Verhältnis, die Trägerfrequenz oder irgendeine andere Art von Informationen aus dem empfangenen ACK-Rahmen (500) beziehen.

5. Computerprogrammprodukt zum Sammeln von Funkinformationen aus Zielvorrichtungen, die mit einem ersten Zugangspunkt (602a) verbunden sind und auf einem ersten Frequenzkanal, Ch1, in einem drahtlosen Netzwerk arbeiten, das Programmanweisungsmedien umfasst, die konfiguriert sind, um, wenn das Programm auf einem Prozessor ausgeführt wird:
einen Prüfrahmen (400) an einer Prüfvorrichtung (602b), die auf einem zweiten Frequenzkanal, Ch2, arbeitet, zu erzeugen, wobei:
die Zieladresse (402) des Prüfrahmens (400) die Adresse einer Zielvorrichtung (604a) ist, und
die BSSID-Adresse (406) des Prüfrahmens (400) die Adresse des ersten Zugangspunkts (602a) ist;
an der Prüfvorrichtung (602b) den Prüfrahmen (400) in eine Übertragungswarteschlange, die mit dem ersten Frequenzkanal, Ch1, verknüpft ist, einzufügen (610), wobei die Quelladresse (404) des Prüfrahmens (400) eine virtuelle Adresse, STA', ist, die die Zielvorrichtung (604a) eindeutig kennzeichnet, wobei sich die virtuelle Adresse von einer beliebigen möglichen MAC-Adresse in dem drahtlosen Netzwerk unterscheidet;
und wobei die Programmanweisungsmedien ferner konfiguriert sind, um, wenn das Programm auf einem Prozessor ausgeführt wird:
wenn ein ACK-Rahmen (500) an der Prüfvorrichtung (602b) empfangen wird (612), den ACK-Rahmen (500) zu analysieren, um zu bestimmen, dass der Sender des ACK-Rahmens (500) die Zielvorrichtung (604a) ist, wenn die Zieladresse (502) des ACK-Rahmens (500) die virtuelle Adresse STA' ist, die die Zielvorrichtung (604a) eindeutig kennzeichnet, und in diesem Fall:
Funkparameter aus dem empfangenen ACK-Rahmen (500) zu messen;
die Funkparameter zu speichern;
die gespeicherten Funkparameter mit der Zielvorrichtung (604a) zu verknüpfen.

6. Computerprogrammprodukt nach Anspruch 5, wobei die Prüfvorrichtung ein Zugangspunkt (602b) ist.

7. Computerprogrammprodukt nach Anspruch 5, wobei die Prüfvorrichtung eine drahtlose Vorrichtung ist.

8. Computerprogrammprodukt nach Anspruch 5, wobei sich die Informationen, die gemessen und in der Prüfvorrichtung (602b) gespeichert werden, auf die Stärke des empfangenen Signals, den Rauschpegel, das Signal-Rausch-Interferenz-Verhältnis, die Trägerfrequenz oder irgendeine andere Art von Informationen aus dem empfangenen ACK-Rahmen (500) beziehen.

9. Vorrichtung zum Sammeln von Funkinformationen aus Zielvorrichtungen, die mit einem ersten Zugangspunkt (602a) verbunden sind und auf einem ersten Frequenzkanal, Ch1, in einem drahtlosen Netzwerk arbeiten, wobei die Vorrichtung auf einem zweiten Frequenzkanal, Ch2, arbeitet, umfassend:
ein Sendeempfängersystem, das konfiguriert ist, um IEEE 802.11-Rahmen auf der MAC-Schicht zu senden und empfangen;
ein Verarbeitungssystem, das konfiguriert ist, um:
einen Prüfrahmen (400) zu erstellen, wobei die Zieladresse (402) des Prüfrahmens (400) die Adresse einer Zielvorrichtung (604a) ist und die BSSID-Adresse (406) des Prüfrahmens (400) die Adresse des ersten Zugangspunkts (602a) ist; und
den Prüfrahmen (400) in eine Übertragungswarteschlange einzufügen, die mit dem ersten Frequenzkanal, Ch1, des Sendeempfängersystems verknüpft ist;
Funkparameter aus einem empfangenen ACK-Rahmen (500) zu analysieren und extrahieren; und
ein Speichersystem, das konfiguriert ist, um die Funkparameter zu speichern;
wobei die Quelladresse (404) des Prüfrahmens (400) eine virtuelle Adresse, STA', ist, die die Zielvorrichtung (604a) eindeutig kennzeichnet, wobei sich die virtuelle Adresse von einer beliebigen möglichen MAC-Adresse in dem drahtlosen Netzwerk unterscheidet;
und wobei das Verarbeitungssystem ferner konfiguriert ist, um nach dem Empfang eines ACK-Rahmens (500) den ACK-Rahmen (500) zu analysieren, um zu bestimmen, dass der Sender des ACK-Rahmens (500) die Zielvorrichtung (604a) ist, wenn die Zieladresse (502) des ACK-Rahmens (500) die virtuelle Adresse, STA', ist, die die Zielvorrichtung (604a) eindeutig kennzeichnet, und in diesem Fall:
Funkparameter aus dem empfangenen ACK-Rahmen (500) zu messen;
die Funkparameter in dem Speichersystem zu speichern;
die gespeicherten Funkparameter mit der Zielvorrichtung (604a) zu verknüpfen.

10. Vorrichtung nach Anspruch 9, wobei die Vorrichtung ein Zugangspunkt ist.

11. Vorrichtung nach Anspruch 9, wobei die Vorrichtung eine drahtlose Vorrichtung ist.

12. Vorrichtung nach Anspruch 9, wobei sich die gemessenen und gespeicherten Informationen auf die Stärke des empfangenen Signals, den Rauschpegel, das Signal-Rausch-Interferenz-Verhältnis, die Trägerfrequenz oder irgendeine andere Art von Informationen aus dem empfangenen ACK-Rahmen (500) beziehen.

## Revendications

1. Procédé pour la collecte d'informations radio provenant de dispositifs cibles connectés à un premier point d'accès (602a) et fonctionnant sur un premier canal de fréquence, Ch1, dans un réseau sans fil, comprenant :
la génération d'une trame de sondage (400) au niveau d'un dispositif de sondage (602b) fonctionnant sur un deuxième canal de fréquence, Ch2, dans lequel :
l'adresse de destination (402) de la trame de sondage (400) est l'adresse d'un dispositif cible (604a), et
l'adresse BSSID (406) de la trame de sondage (400) est l'adresse du premier point d'accès (602a) ;
l'injection (610), au niveau du dispositif de sondage (602b), de la trame de sondage (400) dans une file d'attente de transmission associée au premier canal de fréquence Ch1 ;
dans lequel l'adresse source (404) de la trame de sondage (400) est une adresse virtuelle, STA', qui identifie de manière univoque le dispositif cible (604a), ladite adresse virtuelle étant différente de toute adresse MAC possible dans le réseau sans fil ;
dans lequel le procédé comprend en outre :
lorsqu'une trame ACK (500) est reçue (612) au niveau du dispositif de sondage (602b), l'analyse de la trame ACK (500) pour déterminer que l'émetteur de la trame ACK (500) est le dispositif cible (604a) si l'adresse de destination (502) de la trame ACK (500) est l'adresse virtuelle STA', qui identifie de manière univoque le dispositif cible (604a), et dans ce cas :
mesurer des paramètres radio de la trame ACK (500) reçue ;
stocker les paramètres radio ;
associer les paramètres radio stockés au dispositif cible (604a).

2. Procédé selon la revendication 1, dans lequel le dispositif de sondage est un point d'accès (602b).

3. Procédé selon la revendication 1, dans lequel le dispositif de sondage est un dispositif sans fil.

4. Procédé selon la revendication 1, dans lequel les informations mesurées et stockées dans le dispositif de sondage (602b) sont liées à l'intensité du signal reçu, au niveau de bruit, au rapport signal/bruit et interférence, à la fréquence porteuse ou à tout autre type d'information provenant de la trame ACK (500) reçue.

5. Produit de programme informatique pour la collecte d'informations radio provenant de dispositifs cibles connectés à un premier point d'accès (602a) et fonctionnant sur un premier canal de fréquence, Ch1, dans un réseau sans fil, comprenant des supports d'instructions de programme configurés pour, lorsque le programme est exécuté sur un processeur :
générer une trame de sondage (400) au niveau d'un dispositif de sondage (602b) fonctionnant sur un deuxième canal de fréquence, Ch2, dans lequel :
l'adresse de destination (402) de la trame de sondage (400) est l'adresse d'un dispositif cible (604a), et
l'adresse BSSID (406) de la trame de sondage (400) est l'adresse du premier point d'accès (602a) ;
injecter (610), au niveau du dispositif de sondage (602b), la trame de sondage (400) dans une file d'attente de transmission associée au premier canal de fréquence, Ch1, dans lequel l'adresse source (404) de la trame de sondage (400) est une adresse virtuelle, STA', qui identifie de manière univoque le dispositif cible (604a), ladite adresse virtuelle étant différente de toute adresse MAC possible dans le réseau sans fil ;
et dans lequel les supports d'instructions du programme sont en outre configurés pour, lorsque le programme est exécuté sur un processeur :
lorsqu'une trame ACK (500) est reçue (612) au niveau du dispositif de sondage (602b), analyser la trame ACK (500) pour déterminer que l'émetteur de la trame ACK (500) est le dispositif cible (604a) si l'adresse de destination (502) de la trame ACK (500) est l'adresse virtuelle STA', qui identifie de manière univoque le dispositif cible (604a), et dans ce cas :
mesurer des paramètres radio de la trame ACK (500) reçue ;
stocker les paramètres radio ;
associer les paramètres radio stockés au dispositif cible (604a).

6. Produit de programme informatique selon la revendication 5, dans lequel le dispositif de sondage est un point d'accès (602b).

7. Produit de programme informatique selon la revendication 5, dans lequel le dispositif de sondage est un dispositif sans fil.

8. Produit de programme informatique selon la revendication 5, dans lequel les informations mesurées et stockées dans le dispositif de sondage (602b) sont liées à l'intensité du signal reçu, au niveau de bruit, au rapport signal/bruit et interférence, à la fréquence porteuse ou à tout autre type d'information provenant de la trame ACK (500) reçue.

9. Appareil pour la collecte d'informations radio provenant de dispositifs cibles connectés à un premier point d'accès (602a) et fonctionnant sur un premier canal de fréquence, Ch1, dans un réseau sans fil, l'appareil fonctionnant sur un second canal de fréquence, Ch2, comprenant :
un système émetteur-récepteur configuré pour transmettre et recevoir des trames IEEE 802.11 au niveau de la couche MAC ;
un système de traitement configuré pour :
construire une trame de sondage (400), dans laquelle l'adresse de destination (402) de la trame de sondage (400) est l'adresse d'un dispositif cible (604a) et l'adresse BSSID (406) de la trame de sondage (400) est l'adresse du premier point d'accès (602a) ; et
injecter la trame de sondage (400) dans une file d'attente de transmission associée au premier canal de fréquence, Ch1, du système émetteur-récepteur ;
analyser et extraire des paramètres radio d'une trame ACK (500) reçue et
un système de stockage configuré pour stocker les paramètres radio ;
dans lequel l'adresse source (404) de la trame de sondage (400) est une adresse virtuelle, STA', qui identifie de manière univoque le dispositif cible (604a), ladite adresse virtuelle étant différente de toute adresse MAC possible dans le réseau sans fil ;
et dans lequel le système de traitement est en outre configuré pour, à la réception d'une trame ACK (500), analyser la trame ACK (500) pour déterminer que l'émetteur de la trame ACK (500) est le dispositif cible (604a) si l'adresse de destination (502) de la trame ACK (500) est l'adresse virtuelle, STA', qui identifie de manière univoque le dispositif cible (604a), et dans ce cas :
mesurer des paramètres radio de la trame ACK (500) reçue ;
stocker les paramètres radio sur le système de stockage ;
associer les paramètres radio stockés au dispositif cible (604a).

10. Appareil selon la revendication 9, l'appareil étant un point d'accès.

11. Appareil selon la revendication 9, l'appareil étant un dispositif sans fil.

12. Appareil selon la revendication 9, dans lequel les informations mesurées et stockées sont liées à l'intensité du signal reçu, au niveau de bruit, au rapport signal/bruit et interférence, à la fréquence porteuse ou à tout autre type d'information provenant de la trame ACK (500) reçue.
